# EUROPEAN PATENT SPECIFICATION

(11) **EP 3 826 823 B1**
(45) Date of publication and mention of the grant of the patent: **28.12.2022**
(21) Application number: 19768893.0
(22) Date of filing: 11.07.2019
(51) Int. Cl.: B29C 53/00, B29C 53/58, B29C 53/60, B29C 53/84, F24F 13/02, B29K 101/12, B29K 305/02, B29C 53/56, B29C 53/80, B29L 23/00

(54) **PRODUCTION METHOD FOR A SEMI-RIGID CONDUIT FOR CONVEYING A GAS**
VERFAHREN ZUR HERSTELLUNG EINER HALBSTARREN LEITUNG ZUM TRANSPORT EINES GASES
PROCEDE DE FABRICATION D'UN CONDUIT SEMI-RIGIDE POUR LE TRANSPORT D'UN GAZ

(30) Priority: 23.07.2018 IT 201800007425
(43) Date of publication of application: 02.06.2021
(73) Proprietor: Tecnica S.r.l., 42047 Rolo (RE) (IT)
(72) Inventor: BRUSCHI, Enrico, 42042 Fabbrico (RE) (IT); BRUSCHI, Elena, 42012 Campagnola Emilia (RE) (IT)
(74) Representative: Corradini, Corrado
(86) International application number: PCT/IB2019/055930
(87) International publication number: WO 2020/021373

(56) References cited:
- EP-A2- 1 884 343
- US-A1- 2006 051 547
- US-A1- 2008 060 713

## Description

### TECHNICAL FIELD

The present invention relates to conduits for conveying a gas, in particular conduits for conveying a gas for an air conditioning assembly.

### PRIOR ART

Conduits for conveying gases are known, e.g. for conveying air in an air conditioning assembly, which are composed of a ribbon comprising: a first tape made of polymeric material and a second tape made of polymeric material, between which a tape, or layer, of insulating material is interposed. Such ribbon is wound in a helical fashion so as to form a tubular body wherein the adjacent portions of ribbon, or the edges of the adjacent coils realized by the winding of the ribbon, are solidly constrained to each other through gluing with adhesive products, as described in documents US2008/060713, US2006/051547 or EP1884343.

A problem of such solution is that, because of gluing with adhesive products, the conduit has an internal wall that is conformed like a plurality of lateral surfaces of truncated cones substantially identical and placed in series. In other words, the inner wall is shaped like a sequence of substantially identical converging conduits, wherein the passage portion between the smaller section of one conduit and the larger section of the subsequent one creates a step. Because of this conformation the conduit is adapted to convey an air flow in one direction only, that in which the various sections of the conduit are crossed moving from the larger section to the smaller section. A use of the tube in that way realized in the opposite direction would imply excessive load losses. Another known problem of the solution is that the adhesives tend to crystallize, limiting the flexibility of the conduit.

US2006/060713 proposes the use of microwaves to seal the ribbons. A problem of such solution is that a machine for heat-sealing using microwaves is expensive, prone to malfunctioning due to its complexity and difficult to set. An object of the present invention is to solve said problems of the prior art, with a simple, rational and low-cost solution.

Such object is accomplished by the characteristics of the invention given in the independent claims 1, 5, and 7, respectively. The dependent claims outline preferred and/or particularly advantageous aspects of the invention.

### DISCLOSURE OF THE INVENTION

The invention, particularly, makes available a method for producing a semi-rigid conduit for conveying a gas, comprising the steps of:
- arranging a mandrel, a first tape made of thermoplastic material, a second tape made of thermoplastic material and a third tape made of insulating material,
- forming a continuous three-layer ribbon by superposing the second tape with the first tape and interposing the third tape between the two,
- winding the ribbon in a helical fashion onto the mandrel partially superposing the adjacent portions of the ribbon itself so as to realize a tubular body wherein the first tape faces towards the inside of the tubular body itself,
- heating the ribbon so as to heat seal the superposed portions of the ribbon.

Thanks to such solution, the resulting conduit does not have the steps that conduits of the prior art have and can be used to convey a flow in both travelling directions of the conduit. Furthermore, the solution allows conduits to be obtained having greater elasticity with respect to known devices and that can therefore be compressed and stored in smaller volumes.

Another aspect of the invention envisages that in the step of heating the ribbon, the ribbon is heated through a flow of hot air.

Thanks to such a solution, the tapes are heat-sealed within the context of a particularly simple and cheap solution.

A further aspect of the invention envisages that the method may comprise the step of arranging a wire made of elastic material and inserting such wire between the first tape and the second tape during the step of forming a ribbon. Thanks to such solution the semi-rigid conduit maintains high elasticity and at the same time is structurally reinforced so as to be stronger and more durable. An aspect that contributes to preventing the presence of steps inside the conduit is that the step of heating the ribbon envisages placing a portion of the first tape of a coil of the ribbon in contact with a portion of the first tape of an adjacent coil of the ribbon and heating such portions.

Furthermore, the invention makes available a method for producing a semi-rigid and flame-resistant conduit for conveying a gas, comprising the steps of:
- arranging a mandrel, a first tape made of thermoplastic material, a second tape made of thermoplastic material, a third tape made of insulating material and a fourth tape made of aluminium
- forming a continuous four-layer ribbon by superposing with the fourth tape, in this order, the first tape, the third tape and the second tape,
- winding the ribbon in a helical fashion onto the mandrel partially superposing the adjacent portions of the ribbon itself so as to realize a tubular body wherein the fourth tape faces towards the inside of the tubular body itself,
- heating the ribbon so as to heat seal the superposed portions of the ribbon.

The invention also makes available a semi-rigid conduit for conveying a gas comprising: a ribbon provided with a first tape made of thermoplastic material, a second tape made of thermoplastic material and a third tape made of insulating material, wherein the ribbon is wound in a helical fashion with respect to a longitudinal axis of the conduit and has adjacent portions of the coils of the helix superposed with each other so as to define a tubular body provided with a tubular inner wall and a tubular outer wall, said conduit being characterized in that the tubular inner wall is continuous along the entire longitudinal extension of the conduit.

In this way the conduit allows a flow of gas to be guided in both available directions. In other words it is not important during the installation step to check the orientation of the conduit, which simplifies and speeds up the installation operations.

A further aspect of the invention envisages the portions of first tape and second tape of a coil being heat sealed to the first tape of the adjacent coil.

Thanks to such solution, a conduit is made available provided with a continuous inner wall and therefore free from discontinuities that would cause load losses while conveying the gas and that would impose having to use the conduit for conveying a flow of fluid in one direction only. Furthermore, the conduit would be extremely flexible and could be compressed and stored in smaller volumes with respect to devices of the prior art.

The invention also makes available a method for producing a semi-rigid conduit for conveying a gas, comprising the steps of:
- arranging a mandrel, a first tape made of thermoplastic material, a second tape made of thermoplastic material and a wire made of elastic material,
- forming a continuous three-layer ribbon by superposing the second tape with the first tape and interposing the flexible wire between them,
- winding the ribbon in a helical fashion onto the mandrel partially superposing the adjacent portions of the ribbon itself so as to realize a tubular body wherein the first tape faces towards the inside of the tubular body itself,
- heating the ribbon so as to heat seal the superposed portions of the ribbon

The invention also makes available an air conditioning assembly comprising a conditioning unit, configured to vary at least one physical characteristic of the air and a semi-rigid conduit, realized with the above method, connected in fluid communication with said conditioning unit.

Thanks to such solution, a conditioning assembly is made available provided with at least one semi-rigid conduit as described above and therefore with the above-described advantages.

### BRIEF DESCRIPTION OF THE DRAWINGS

Further characteristics and advantages of the invention will become clear from reading the following description provided as a non-limiting example, with the help of the figures illustrated in the attached tables.
Figure 1 is a view from above of a semi-rigid conduit according to the invention.
Figure 2 is a sectional view according to the sectional plane II-II of the semi-rigid conduit of Figure 1.
Figure 3 is a sectional view according to the sectional plane III-III of the semi-rigid conduit of Figure 1.
Figure 4 is a sectional view according to the sectional plane IV-IV of a semi-rigid conduit according to a different embodiment.
Figure 5 is a sectional view according to the sectional plane V-V of the same embodiment of Figure 4.

### DETAILED DESCRIPTION

With particular reference to such figures, number 1 indicates as a whole a conduit, being semi-rigid, for conveying a gas (or a mixture of gases).

The conduit 1 has a tubular shape, i.e. it has a tubular inner wall 5 that delimits a channel C for conveying a gas and a tubular outer wall 10.

In particular, the conduit is defined by the helical winding about a longitudinal axis L of the conduit 1 itself of a ribbon 15, of multi-layer type, along an advancement direction A parallel to the longitudinal axis L.

The ribbon 15 is firstly composed of a first tape 20, for example smooth, made of thermoplastic material.

Preferably, the first tape 20 is made of polyolefin based polymeric material. The thickness of the first tape 20 is lower with respect to the width of the first tape itself.

It is specified that in this document width means the size of the tape in the transverse direction to a longitudinal axis of the tape itself.

For example, the ratio between the thickness and the width is comprised between 1:50 and 1:200, preferably it is 1:100.

The ribbon 15 then has a second tape 25, for example smooth, made of thermoplastic material.

For example, the second tape 25 is made of polyolefin-based polymeric material.

The thickness of the second tape 25 is lower with respect to the width of the second tape 25 itself.

For example, the ratio between the thickness and the width is comprised between 1:50 and 1:200, preferably it is 1:100.

The second tape 25 has the same width with respect to the width of the first tape 20, e.g. the second tape 25 has the same dimensions with respect to the first tape 20.

The second tape 25 is adapted to be superposed in contact with the first tape 20.

The ribbon 15 can then comprise a third tape 30 interposed between the first tape 20 and the second tape 25.

The third tape 30 is made of porous material, e.g. thermally and acoustically insulated.

For example, the third tape 30 is made of expanded polyethylene.

The thickness of the third tape 30 is lower with respect to the width of the third tape itself 30.

For example, the ratio between the thickness and the width is comprised between 1:10 and 1:50, preferably it is 1:25.

The third tape has the same width as the width of the first tape 20 and of the second tape 25 and a higher thickness with respect to said tapes, e.g. between 10 to 500 times higher.

The first tape 20, the second tape 25 and the third tape 30 are joined together and fixed to form the ribbon 15, of multi-layer type.

For example, the first tape 20, the second tape 25 and the third tape 30 are heat sealed to each other, e.g. by means of a forced flow of hot air.

The ribbon 15 also has a wire 35 of elastically deformable material interposed between the first tape 20 and the second tape 25 i.e. inserted at the third tape 30.

The wire 35 is made of metal, e.g. harmonic steel, and can have a diameter comprised between 0.5 mm and 3 mm, preferably 1.2 mm.

It is not excluded that in other embodiments, the wire 35 may be made of another rigid and elastically deformable material.

The ribbon 15 is therefore substantially conformed like a multi-layer tape, e.g. having a substantially quadrangular cross section, which has a first longitudinal edge 40 and a second longitudinal edge 45 opposing the first edge 40.

In particular, the ribbon 15 thus conformed has a width equal to that of the first tape 20, of the second tape 25 and of the third tape 30, and thickness equal to the sum of the thicknesses of the first tape 20, of the second tape 25 and of the third tape 30.

The ribbon 15 is wound to form the conduit 1, i.e. the conduit 1 is defined by a series of coils S of the ribbon 15 wound in a helical, consecutive and flanked fashion along the advancement direction A and realized so that two consecutive coils S are at least partially superposed.

The coils S are identical to each other, i.e. they are realized so that each winding coil S of the ribbon 15 defines an equal portion of conduit 1.

The coils S are superposed so that a portion of first longitudinal edge 40 of the ribbon 15 related to a coil S is superposed with a portion of second longitudinal edge 45 of the ribbon 15 related to the adjacent coil S.

In particular, a portion of first tape 20 of a coil S is superposed with a preceding portion of second tape 25 of a coil S, with respect to the advancement direction A. For example, a portion of first tape of said coil S is superposed with a portion of first tape 20 of a subsequent coil S, with respect to the advancement direction A.

The portion of first tape 20 related to a coil S is joined and fixed to the portion of first tape 20 and of second tape 25 of a preceding coil S with which it is in contact.

In other words, a portion of first tape 20, corresponding to the second edge 45, of a coil S is superposed and fixed to a portion of second tape 25, corresponding to the first edge 40, of a preceding coil S.

Furthermore, a portion of first tape 20, corresponding to the second edge 45, of a coil S is superposed and fixed to a portion of first tape 20, corresponding to the first edge 40, of a preceding coil S, e.g. said portions are fixed together to a portion of second tape 25, corresponding to the first edge 40, of the preceding coil S.

In particular, the superposed portions are fixed at the contact point of the first edge 40 of a coil S with a subsequent coil S.

Said superposed and fixed portions are heat sealed to each other.

The tubular inner wall 5 of the conduit is defined by the first tape 20 and is continuous along the entire longitudinal extension of the conduit.

Specifically, in any cross section containing the longitudinal axis L of a longitudinal half of the conduit 1, the first tape 20 defines a single continuous line at least along two consecutive coils S, preferably along the whole conduit 1. Furthermore, in any cross section of the conduit, the first tape 20 has the profile of a single continuous line closed in a loop.

At the same time, the wire 35 made of rigid and elastically deformable material also defines a structural reinforcement helicoid inside the conduit 1, and in particular is wound at the portions of superposed coils S.

Each coil S is therefore flexible thanks to the structural properties of the materials of the first tape 20, of the second tape 25 and of the third tape 30 and at the same time structurally sustained by the wire 35 made of elastically deformable rigid material.

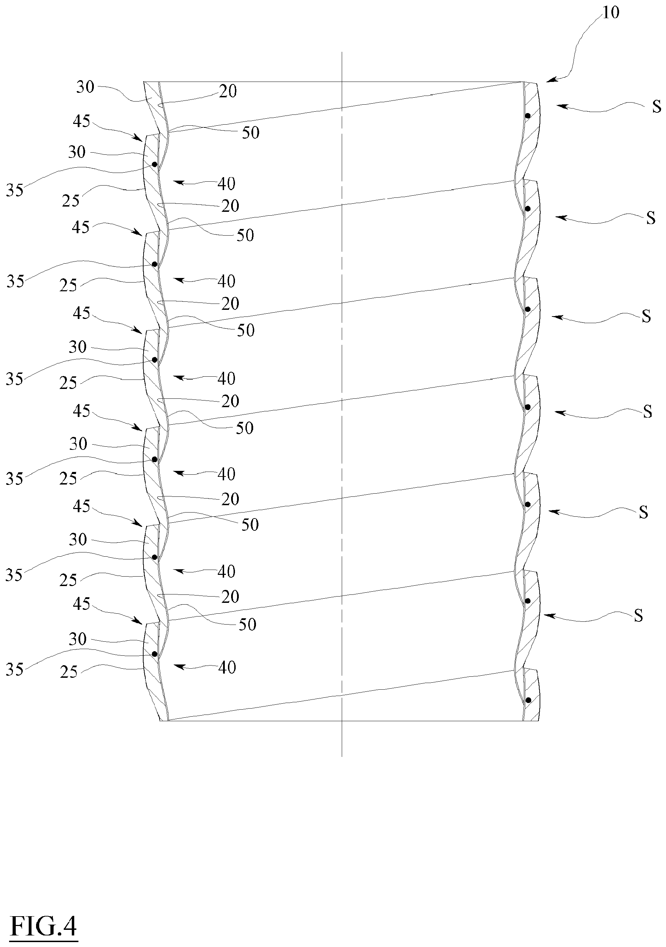

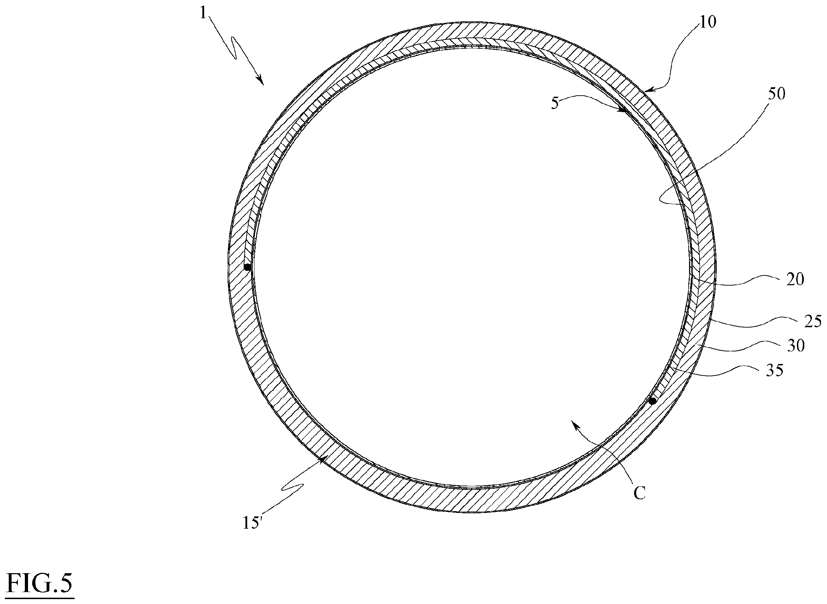

In particular, the superposed portions of the coils S are also elastically flexible. In one embodiment of the conduit, being semi-rigid, illustrated in Figures 4 and 5, the ribbon 15' comprises, as well as the first tape 20, second tape 25 and third tape 30, a fourth tape 50 made of aluminium, which is superposed in contact with a face of the first tape 20 opposite the second tape 25.

The fourth tape 50 is heat sealed to the first tape 25.

The fourth tape 50 has the same width and thickness as the first tape 20. The ribbon 15' is therefore conformed like a multi-layer tape, e.g. having a quadrangular transverse shape, formed by the superposition of the fourth tape 50 with the first tape 20, the third tape 30 and the second tape 25.

The ribbon 15' can comprise a wire 35 made of elastically deformable material for stiffening the conduit.

In this embodiment, the conduit 1 is defined by a series of coils S of the ribbon 15' wound in a helical, consecutive and flanked fashion along the advancement direction A.

Furthermore, the coils S are superposed so that a portion of fourth tape 50 of a coil S is superposed in contact with a portion of second tape 25 of a preceding coil S, with respect to the advancement direction A.

In other words, a portion of first tape 20, corresponding to the second edge 45, of a coil S is superposed and fixed to a portion of second tape 25, corresponding to the first edge 40, of a preceding coil S. For example a portion of fourth tape 50 of said coil is superposed with a portion of fourth tape 50 of a subsequent coil S, with respect to the advancement direction A.

The superposed portions are heat sealed at the contact point of the first edge 40 of a coil S with a subsequent coil S.

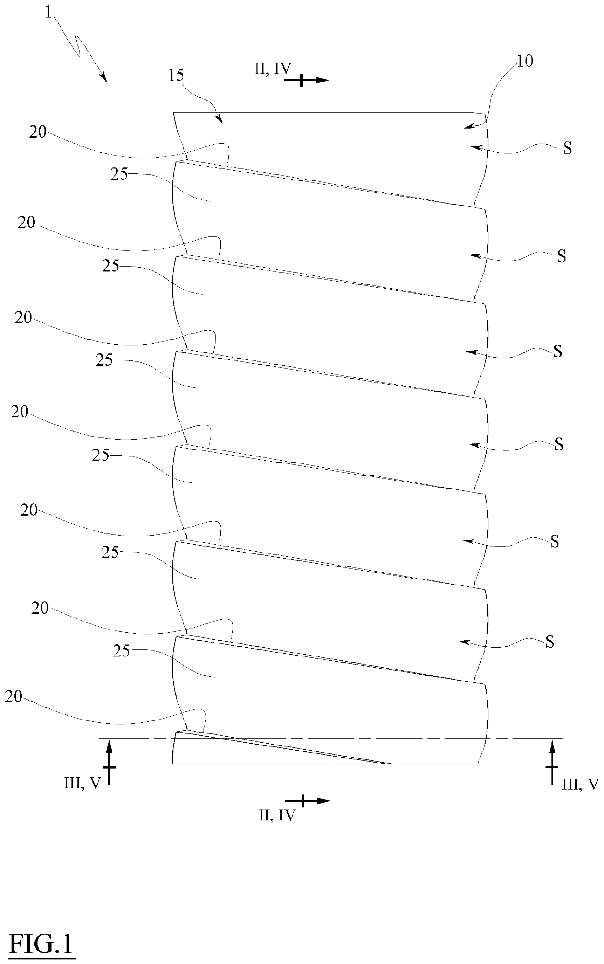

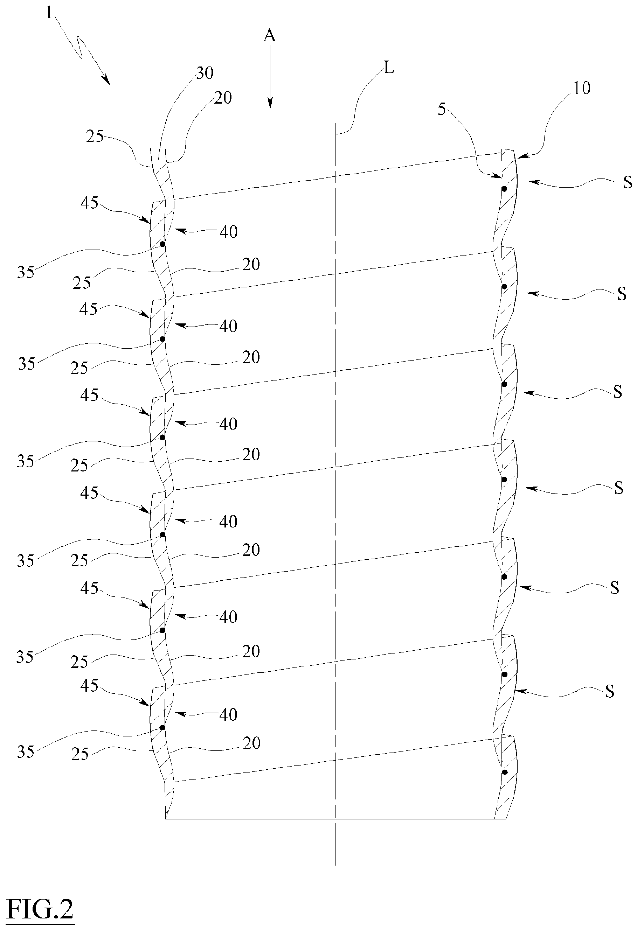

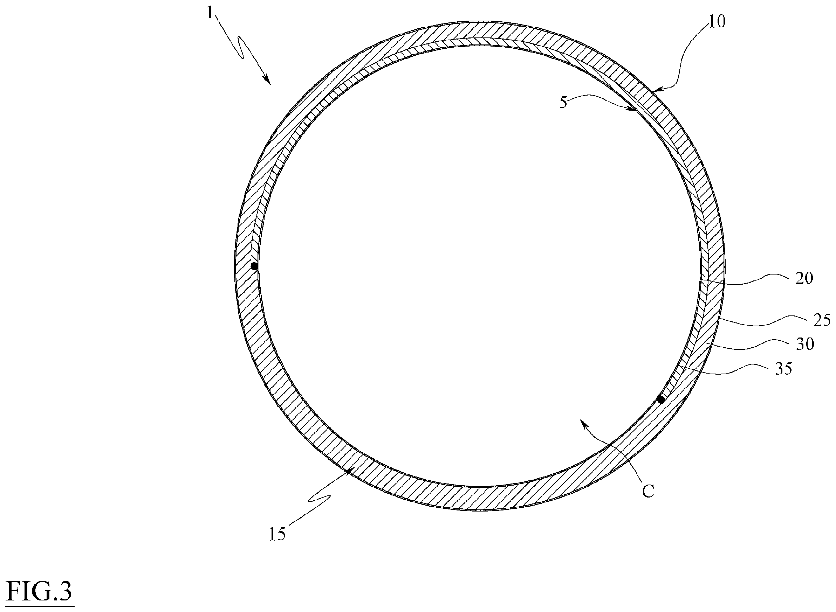

The invention further makes available a method for producing the conduit 1, being semi-rigid, as illustrated in Figures 1, 2 and 3.

The method envisages arranging a winding mandrel, the first tape 20, the second tape 25 and the third tape 30 and realizing the ribbon 15 by superposing the third tape 30 with the first tape 20 and the second tape 25 with the third tape 30.

For example, the method may envisage arranging the wire 35 made of elastic material between the first tape 20 and the second tape 25, i.e. at the third tape 30.

The step of forming the ribbon 15 envisages heat sealing the three tapes 20, 25, 30 together.

Once the ribbon 15 has been formed, the method envisages the step of winding the ribbon 15 onto the mandrel in a helical fashion.

The step of winding the ribbon 15 onto the mandrel in a helical fashion envisages forming a tubular body, so that the first tape 20 defines the inner wall 5 which delimits the conveying channel.

Furthermore, the step of winding the ribbon 15 in a helical fashion envisages forming a plurality of consecutive coils S of ribbon 15, so that each subsequent coil S is at least partially superposed with the preceding coil S, e.g. along at least one whole 360° angle with respect to the longitudinal axis L.

The method also envisages heating the ribbon 15 during the winding, e.g. through a flow of hot air forced towards the mandrel, so as to heat seal the superposed portions of the coils S.

In other words, so as to heat seal the portion of first tape 20 of the coil S with the portion of second tape 25 of the preceding coil S and the portion of first tape 20 of the subsequent coil S with the portion of first tape 20 of the preceding coil S.

An embodiment of the invention illustrated in figures 1, 4 and 5 is made available by another method of realizing a conduit, being semi-rigid, for conveying a gas.

The method envisages arranging a winding mandrel, the first tape 20, the second tape 25, the third tape 30 and the fourth tape 50 and realizing the ribbon 15' by superposing with the fourth tape 50, in this order, the first tape 20, the third tape 30 and the second tape 25.

For example, the method may envisage arranging the wire 35 made of elastic material between the first tape 20 and the second tape 25, i.e. at the third tape 30, e.g. inside the third tape 30.

The step of forming the ribbon 15' envisages heat sealing the four tapes 20, 25, 30 and 50 together.

Once the ribbon 15' has been formed, the method envisages the step of winding the ribbon 15' onto the mandrel in a helical fashion.

The step of winding the ribbon 15' onto the mandrel in a helical fashion envisages forming a tubular body, so that the fourth tape 50 defines the inner wall 5 which delimits the conveying channel C.

Furthermore, the step of winding the ribbon 15' in a helical fashion envisages forming a plurality of consecutive coils S of ribbon 15', so that each coil S is at least partially superposed with the preceding coil S, e.g. along at least one whole 360° angle with respect to the longitudinal axis L.

The method also envisages heating the ribbon 15' during the winding, e.g. through a flow of hot air forced towards the mandrel, so as to heat seal the superposed portions of the coils S.

In other words, the portion of fourth tape 50 of a coil S is heat sealed with the portion of second tape 25 of the preceding coil S.

A further embodiment of the invention makes available another method of realizing a conduit, being semi-rigid, for conveying a gas (or a mixture of gases), in particular not provided with an intermediate insulating layer.

The method firstly envisages arranging a mandrel adapted to support the conduit 1 during the realization thereof.

The method then envisages arranging the first tape 20 and the second tape 25.

In particular, in such a way that the second tape 25 is superposed in a plan arrangement with the first tape.

Subsequently, the method envisages arranging the wire 35 made of elastic material between the first tape 20 and the second tape 25.

The method then envisages fixing the first 20 and the second 25 tape to each other to form with the wire 35 made of elastic material a ribbon, comprising three layers and continuous, e.g. through heat sealing by means of a hot air flow forced towards the mandrel.

The method also envisages winding the ribbon onto the mandrel in a helical fashion so as to form a tubular body, in such a way that the first tape 20 faces towards the inside of the tubular body itself.

In particular the method envisages forming consecutive coils of ribbon, so that each subsequent coil is at least partially superposed with the preceding coil, i.e. so that a portion of first tape 20 of a subsequent coil is at least superposed with a portion of second tape 25 of the preceding coil S and that then said portion of first tape 20 descends again to the level of the portion of first tape 20 of the preceding coil S itself.

The method also envisages heating the ribbon during winding, e.g. through the flow of hot air forced towards the mandrel, so as to heat seal the superposed portions of the coils S, i.e. the portion of first tape 20 of the subsequent coil S with the portion of second tape 20 of the preceding coil S and the portion of first tape 20 of the subsequent coil S with the portion of first tape 20 of the preceding coil S.

## Claims

1. A method for producing a conduit (1) for conveying a gas, being semi-rigid, comprising the steps of:
- arranging a mandrel, a first tape (20) made of thermoplastic material, a second tape (25) made of thermoplastic material and a third tape (30) made of insulating material,
- forming a ribbon (15), comprising three layers and continuous, by superposing the second tape (25) with the first tape (20) and interposing the third tape (30) between the two,
- winding the ribbon (15) in a helical fashion onto the mandrel partially superposing the portions (40,45), adjacent to one another, of the ribbon (15) itself so as to realize a tubular body wherein the first tape (20) faces towards the inside of the tubular body itself,
- heating the ribbon (15) so as to heat seal the portions (40,45), that are superposed, of the ribbon (15),
wherein the step of heating the ribbon (15) so as to heat seal the portions (40,45) envisages heating through a flow of air.

2. The method according to claim 1, wherein the step of heating the ribbon (15) through a flow of air is during winding.

3. The method according to claim 1, comprises the step of arranging a wire (35) made of elastic material and inserting such wire (35) between the first tape (20) and the second tape (25) during the step of forming a ribbon (15).

4. The method according to claim 1, wherein the step of heating the ribbon (15) envisages placing a portion of the first tape (20) of a coil (S) of the ribbon (15) in contact with a portion of the first tape (20) of a coil (S) of the ribbon (15), adjacent to the other one, and heating such portions.

5. A method for producing a conduit (1) for conveying a gas, being semi-rigid and flame-resistant, comprising the steps of:
- arranging a mandrel, a first tape (20) made of thermoplastic material, a second tape (25) made of thermoplastic material and a third tape (30) made of insulating material and a fourth tape (50) made of aluminium,
- forming a ribbon (15'), comprising four layers and continuous, by superposing on the fourth tape (50), in this order, the first tape (20), the third tape (30) and the second tape (25),
- winding the ribbon (15) in a helical fashion onto the mandrel partially superposing the portions (40,45), adjacent to one another, of the ribbon (15') itself so as to realize a tubular body wherein the fourth tape (50) faces towards the inside of the tubular body itself,
- heating the ribbon (15') so as to heat seal the portions (40,45), that are superposed, of the ribbon (15),
wherein the step of heating the ribbon (15) so as to heat seal the portions (40,45) envisages heating through a flow of air.

6. Method according to claim 5, wherein the step of heating the ribbon (15') through a flow of air is during winding.

7. A method for producing a conduit (1), being semi rigid, for conveying a gas, comprising the steps of:
- arranging a mandrel, a first tape (20) made of thermoplastic material, a second tape (25) made of thermoplastic material and a wire (35) made of elastic material,
- forming a ribbon (15), comprising three layers and continuous, by superposing the second tape (25) with the first tape (20) and interposing the wire (35) between them,
- winding the ribbon (15) in a helical fashion onto the mandrel partially superposing portions (40,45), adjacent to one another, of the ribbon (15) itself so as to realize a tubular body wherein the first tape (20) faces towards the inside of the tubular body itself,
- heating the ribbon (15) so as to heat seal the portions that are superposed of the ribbon
wherein the step of heating the ribbon (15) so as to heat seal the portions (40,45) envisages heating through a flow of air.

## Patentansprüche

1. Verfahren zum Herstellen einer Leitung (1) zum Transportieren eines Gases, die halbstarr ist, umfassend die Folgenden Schritte:
- Anordnen eines Dorns, eines ersten Streifens (20), der aus thermoplastischem Material gefertigt ist, eines zweiten Streifens (25), der aus thermoplastischem Material gefertigt ist, und eines dritten Streifens (30), der aus Isoliermaterial gefertigt ist,
- Bilden eines Bands (15'), umfassend drei Schichten und kontinuierlich durch Übereinanderlegen des zweiten Streifens (25) mit dem ersten Streifen (20) und Einfügen des dritten Streifens (30) zwischen den zwei,
- schraubenförmiges Aufwickeln des Bands (15) auf den Dorn, wobei die aneinander angrenzenden Abschnitte (40, 45) des Bands (15') an sich teilweise übereinandergelegt werden, um einen rohrförmigen Körper auszuführen, wobei der erste Streifen (20) der Innenseite des rohrförmigen Körpers an sich zugewandt ist,
- Erhitzen des Bands (15'), um die übereinandergelegten Abschnitte (40, 45) des Bands (15) zu verschweißen,
wobei der Schritt eines Erhitzens des Bands (15), um die Abschnitte (40, 45) zu verschweißen, ein Erhitzen durch einen Luftstrom vorsieht.

2. Verfahren nach Anspruch 1, wobei der Schritt eines Erhitzens des Bands (15') durch einen Luftstrom während des Aufwickelns ist.

3. Verfahren nach Anspruch 1, umfassend den Schritt eines Anordnens eines Drahts (35), der aus elastischem Material gefertigt ist, und eines Einfügens eines solchen Drahts (35) zwischen dem ersten Streifen (20) und dem zweiten Streifen (25) während des Schrittes eines Bildens eines Bands (15).

4. Verfahren nach Anspruch 1, wobei der Schritt eines Erhitzens des Bands (15) vorsieht, einen Abschnitt des ersten Streifens (20) einer Spule (S) des Bands (15) in Kontakt mit einem Abschnitt des ersten Streifens (20) einer Spule (S) des Bands (15) zu bringen, das angrenzend an das andere ist, und diese Abschnitte zu erhitzen.

5. Verfahren zum Herstellen einer Leitung (1) zum Transportieren eines Gases, die halbstarr und flammfest ist, umfassend die folgenden Schritte:
- Anordnen eines Dorns, eines ersten Streifens (20), der aus thermoplastischem Material gefertigt ist, eines zweiten Streifens (25), des aus thermoplastischem Material gefertigt ist, eines dritten Streifens (30), der aus Isoliermaterial gefertigt ist, und eines vierten Streifens (50), der aus Aluminium gefertigt ist,
- Bilden eines Bands (15'), umfassend vier Schichten und kontinuierlich, indem auf dem vierten Streifen (50) der erste Streifen (20), der dritte Streifen (30) und der zweite Streifen (25) in dieser Reihenfolge übereinandergelegt werden,
- schraubenförmiges Aufwickeln des Bands (15) auf den Dorn, wobei die aneinander angrenzenden Abschnitte (40, 45) des Bands (15') an sich teilweise übereinandergelegt werden, um einen rohrförmigen Körper auszuführen, wobei der vierte Streifen (50) der Innenseite des rohrförmigen Körpers an sich zugewandt ist,
- Erhitzen des Bands (15'), um die übereinandergelegten Abschnitte (40, 45) des Bands (15) zu verschweißen,
wobei der Schritt eines Erhitzens des Bands (15), um die Abschnitte (40, 45) zu verschweißen, ein Erhitzen durch einen Luftstrom vorsieht.

6. Verfahren nach Anspruch 5, wobei der Schritt eines Erhitzens des Bands (15') durch einen Luftstrom während des Aufwickelns ist.

7. Verfahren zum Herstellen einer halbstarren Leitung (1) zum Transportieren eines Gases, umfassend die folgenden Schritte:
- Anordnen eines Dorns, eines ersten Streifens (20), der aus thermoplastischem Material gefertigt ist, eines zweiten Streifens (25), der aus thermoplastischem Material gefertigt ist, und eines Drahts (35), der aus elastischem Material gefertigt ist,
- Bilden eines Bands (15'), umfassend drei Schichten und kontinuierlich durch Übereinanderlegen des zweiten Streifens (25) mit dem ersten Streifen (20) und Einfügen des Drahts (35) dazwischen,
- schraubenförmiges Aufwickeln des Bands (15) auf den Dorn, wobei die aneinander angrenzenden Abschnitte (40, 45) des Bands (15') an sich teilweise übereinandergelegt werden, um einen rohrförmigen Körper auszuführen, wobei der erste Streifen (20) der Innenseite des rohrförmigen Körpers an sich zugewandt ist,
- Erhitzen des Bands (15), um die übereinandergelegten Abschnitte des Bands zu verschweißen,
wobei der Schritt eines Erhitzens des Bands (15), um die Abschnitte (40, 45) zu verschweißen, ein Erhitzen durch einen Luftstrom vorsieht.

## Revendications

1. Procédé de fabrication d'un conduit (1) destiné au transport d'un gaz semi rigide, comprenant les étapes suivantes:
- la disposition d'un mandrin, d'une première bande (20) en matière thermoplastique, d'une deuxième bande (25) en matériau thermoplastique et d'une troisième bande (30) en matériau isolant,
- la formation d'un ruban (15), comprenant trois couches et continu, par superposition de la deuxième bande (25) avec la première bande (20) et par interposition de la troisième bande (30) entre les deux,
- l'enroulement du ruban (15) de manière hélicoïdale sur le mandrin en superposant partiellement les parties (40, 45), adjacentes les unes aux autres, du ruban (15) lui-même de manière à réaliser un corps tubulaire dans lequel la première bande (20) est orientée vers l'intérieur du corps tubulaire lui-même,
- le chauffage du ruban (15) de manière à sceller thermiquement les parties (40,45) superposées du ruban (15),
dans lequel l'étape de chauffage du ruban (15) de façon à sceller thermiquement les parties (40, 45) nécessite un chauffage par un flux d'air.

2. Procédé selon la revendication 1, dans lequel l'étape de chauffage du ruban (15) par un flux d'air se fait pendant l'enroulement.

3. Procédé selon la revendication 1, comprenant l'étape consistant à disposer un fil (35) fait d'un matériau élastique et à insérer ce fil (35) entre la première bande (20) et la deuxième bande (25) pendant l'étape de formation d'un ruban (15).

4. Procédé selon la revendication 1, dans lequel l'étape de chauffage du ruban (15) nécessite de placer une partie du premier ruban (20) d'une bobine (S) du ruban (15) en contact avec une partie du premier ruban (20) d'une bobine (S) du ruban (15), adjacente à l'autre, et de chauffer ces parties.

5. Procédé de fabrication d'un conduit (1) destiné au transport d'un gaz, semi-rigide et résistant aux flammes, comprenant les étapes suivantes:
- la disposition d'un mandrin, d'une première bande (20) en matériau thermoplastique, d'une deuxième bande (25) en matériau thermoplastique et d'une troisième bande (30) en matériau isolant, et d'une quatrième bande (50) en aluminium,
- la formation d'un ruban (15'), comprenant quatre couches et continu, par superposition sur la quatrième bande (50) dans cet ordre, la première bande (20), la troisième bande (30) et la deuxième bande (25),
- l'enroulement du ruban (15) de manière hélicoïdale sur le mandrin en superposant partiellement les parties (40, 45), adjacentes les unes aux autres, du ruban (15') lui-même de manière à réaliser un corps tubulaire dans lequel la quatrième bande (50) est orientée vers l'intérieur du corps tubulaire lui-même,
- le chauffage du ruban (15') de manière à sceller thermiquement les parties (40, 45) superposées du ruban (15),
dans lequel l'étape de chauffage du ruban (15) de façon à sceller thermiquement les parties (40, 45) nécessite un chauffage par un flux d'air.

6. Procédé selon la revendication 5, dans lequel l'étape de chauffage du ruban (15') par un flux d'air se fait pendant l'enroulement.

7. Procédé de fabrication d'un conduit (1), semi rigide, destiné au transport d'un gaz, comprenant les étapes suivantes:
- la disposition d'un mandrin, d'une première bande (20) en matériau thermoplastique, d'une deuxième bande (25) en matériau thermoplastique et d'un fil (35) en matériau élastique,
- la formation d'un ruban (15), comprenant trois couches et continu, par superposition de la deuxième bande (25) avec la première bande (20) et par interposition du fil (35) entre elles,
- l'enroulement du ruban (15) de manière hélicoïdale sur le mandrin en superposant partiellement les parties (40,45), adjacentes les unes aux autres, du ruban (15) lui-même de manière à réaliser un corps tubulaire dans lequel la première bande (20) est orientée vers l'intérieur du corps tubulaire lui-même,
- le chauffage du ruban (15) de manière à sceller thermiquement les parties superposées du ruban
dans lequel l'étape de chauffage du ruban (15) de façon à sceller thermiquement les parties (40, 45) nécessite un chauffage par un flux d'air.
